# EUROPÄISCHE PATENTANMELDUNG

(11) **EP 1 689 092 A2**
(43) Veröffentlichungstag der Anmeldung: **09.08.2006**
(21) Anmeldenummer: 06100551.8
(22) Anmeldetag: 19.01.2006
(51) Int. Cl.: H04B 5/00

(54) **Nachrichtenübertragungssystem unter Verwendung eines elektrischen Nahfelds**

(30) Priorität: 03.02.2005 DE 102005005036
(71) Anmelder: SIEMENS AKTIENGESELLSCHAFT, 80333 München (DE)
(72) Erfinder: Pohl, Alfred, 2130, Mistelbach (AT)

(57) **Zusammenfassung**

Die Erfindung betrifft ein Nachrichtenübertragungssystem, das nach dem Prinzip der elektrischen Nahfeldübertragung durch geführte Ausbreitung an einem elektrisch leitenden Infrastrukturkörper (25) arbeitet, wobei entsprechende Koppelelemente (24,26) zu Ein- und Auskopplung vorgesehen sind. Senderseitig ist ein Wandler (20) vorgesehen, der die zur Verfügung stehende nicht elektrische Prozess- oder Schwingungsenergie in elektrische Energie umwandelt. Dem Wandler (20) ist ein Sensor (21) nachgeschaltet, der als messwertabhängiger Bandpass ausgeführt ist und ein messwertabhängiges schmalbandiges Signalspektrum erzeugt. Dieses wird mittels elektrischem Nahfeld übertragen.

## Beschreibung

Die Erfindung betrifft ein Nachrichtenübertragungssystem mit einem Sender, der ein erstes Koppelelement aufweist, mit einem Empfänger, der ein zweites Koppelelement aufweist, mit einem Infrastrukturkörper, der eine elektrische Leiterbahn aufweist, wobei das erste Koppelelement zur Ausstreuung eines elektrischen Nahfelds und Einkopplung desselben in die Leiterbahn dient und das zweite Koppelelement zur Auskopplung des in der Leiterbahn übertragenen Nahfelds dient, sowie mit mindestens einem Sensor und einer sensorseitigen Energiequelle.

Ein derartiges Nachrichtenübertragungssystem ist aus der WO 2004/036784 A1 bekannt. Das hier offenbarte Nachrichtenübertragungssystem weist einen Sender auf, der ein elektrisches Nahfeld unsymmetrisch in ein elektrisches Leiterelement kapazitiv einkoppelt. Das Leiterelement besteht aus einem im wesentlichen homogenen Medium und weist eine Impedanz zur Erde auf, die als Rückleiter bei der Nachrichtenübertragung dient. Ein Empfänger koppelt das elektrische Feld kapazitiv aus und demoduliert die übertragene Nachricht. Das Nachrichtenübertragungssystem kann z.B. bei einem Reifen-Druckmesssystem eines Kraftfahrzeugs verwendet werden, wobei das Leiterelement dann ein Teil der Karosserie des Kraftfahrzeugs ist. Bei dem hier offenbarten Nachrichtenübertragungssystem weisen der Sender und Empfänger jeweils eigenständige Energiequellen auf.

Weiterhin ist eine Anordnung und ein Verfahren zur Erzeugung codierter Hochfrequenzsignale gemäß WO 98/36395 bekannt. Hier ist die Verwendung eines Wandlers beschrieben, der aus der Umgebung verfügbare nicht elektrische Primärenergie in elektrische Energie umwandelt. An dem Wandler ist ein Element mit nicht linearer Kennlinie angekoppelt, um ein hochfrequentes Trägersignal zu erzeugen. Eine Codierungseinrichtung dient zur Aufmodulation eines Messsignals auf das hochfrequente Trägersignal.

Der Erfindung liegt die Aufgabe zugrunde, ein Nachrichtenübertragungssystem der oben genannten Art zu schaffen, das senderseitig ohne eine eigenständige Energiequelle auskommt.

Die Aufgabe wird dadurch gelöst, dass die Energiequelle als erster Wandler realisiert ist, der die zur Verfügung stehende nicht elektrische Prozess- oder Schwingungsenergie in elektrische Energie umwandelt.

Weitere vorteilhafte Ausbildungen der Erfindung sind den Unteransprüchen zu entnehmen.

Eine besonders einfache Ausführung besteht, wenn der erste Wandler nach dem elektrodynamischen Prinzip oder piezoelektrisch arbeitet.

Eine besonders vorteilhafte Ausführung ist gegeben, wenn dem ersten Wandler, der zur Erzeugung eines breitbandigen Signalspektrums aus der Prozess- oder Schwingungsenergie dient, ein zweiter Wandler nachgeschaltet ist, durch den das breitbandige Signalspektrum in ein hochfrequentes Trägersignal überführbar ist. Mit nur geringem Aufwand lässt sich auf diese Weise das hochfrequente Trägersignal erzeugen, das für die Nachrichtenübertragung mittels eines elektrischen Nahfeldes benötigt wird.

Zur Aufmodulation eines vom Sensor erfassten Messsignals auf das hochfrequente Trägersignal wird vorteilhafter Weise ein Modulator vorgesehen.

Ein Ausführungsbeispiel der Erfindung wird im folgenden anhand einer Zeichnung näher erläutert. Es zeigen:
- FIG 1: ein erfindungsgemäßes Nachrichtenübertragungssystem,
- FIG 2: ein Blockschaltbild eines bekannten Nachrichtenübertragungssystems und
- FIG 3: ein Blockschaltbild eines Senders/Empfängers des Nachrichtenübertragungssystems nach FIG 2.

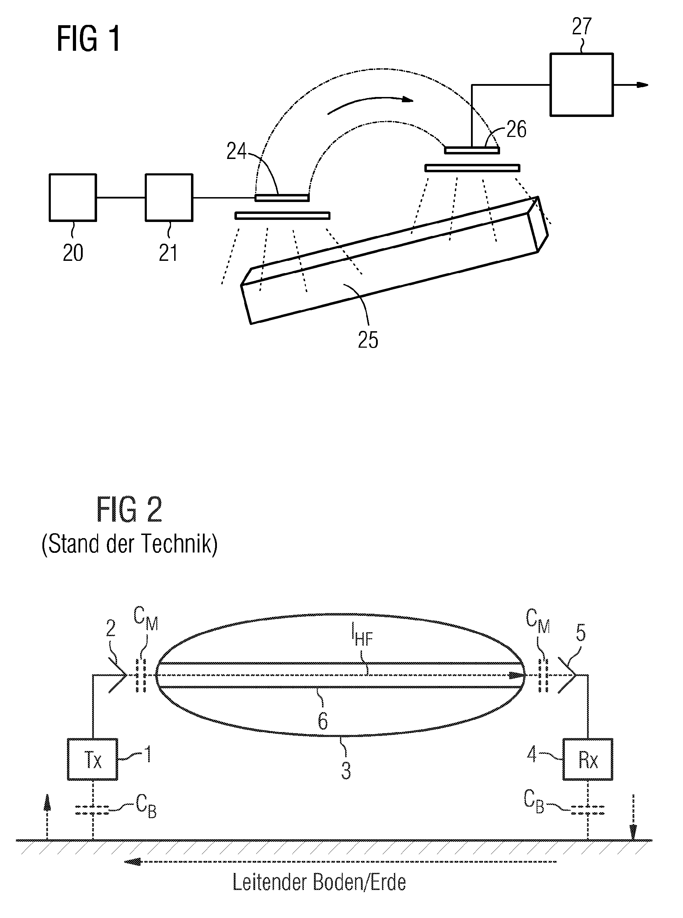

Ein Nachrichtenübertragungssystem nach dem Stand der Technik ist in FIG 2 dargestellt. Es weist einen Sender 1 mit einem Sendeelement Tx auf, der über ein Koppelelement 2 ein elektrisches Nahfeld als Streufeld erzeugt. Mit Hilfe des elektrischen Feldes soll ein Signalstrom in einem Infrastrukturkörper 3 induziert und eine Nachricht (Daten, Informationen, Signale) übertragen werden. Auf der Empfangsseite ist ein Empfänger 4, der ebenfalls ein Koppelelement 5 aufweist, zum "Empfangen" des vom Signalstrom induzierten, elektrischen Feldes.

Zwischen Sender 1 und Empfänger 4 ist der Infrastrukturkörper 3 angeordnet, der ein oder mehrere von Erde (Erdpotenzial) elektrisch isolierte und elektrisch leitende Elemente 6 (als Leiterelement oder elektrischer Leiter bezeichnet) aufweist. Sender 1 und Empfänger 4 weisen jeweils eine Kapazität gegen Erde auf (im Folgenden als Bodenkapazität C_{B} bezeichnet).

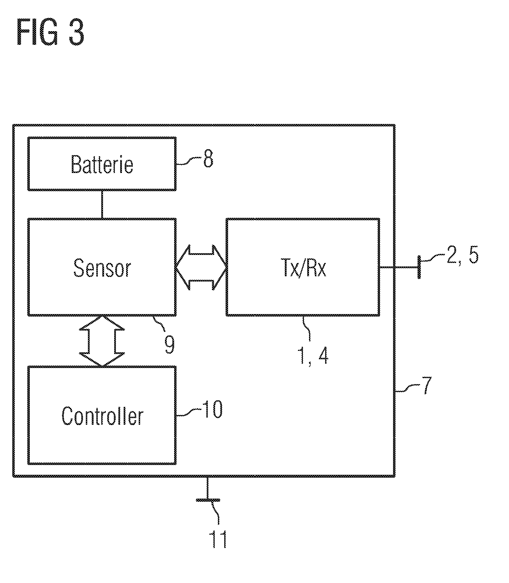

Zum Übertragen von Nachrichten erzeugt der Sender 1 über sein Koppelelement 2 ein quasistationäres elektrisches Nahfeld, das in dem elektrischen Leiterelement des Infrastrukturkörpers 3 eingestreut wird. Der freie Abstand zwischen dem Koppelelement 2 und dem Leiterelement 6 wird durch einen Verschiebungsstrom überbrückt, der über die "virtuelle" Kapazität C_{M} (gestrichelt in FIG 2 dargestellt) zwischen Koppelelement 2 und Leiterelement 6 fließt. In dem elektrischen Leiterelement 6 fließt ein hochfrequenter Leitungsstrom I_{RF} (gestrichelter Pfeil im Leiterelement 6 in FIG 3), der im Bereich des Koppelelements 5 des Empfängers 4 ein quasistationäres elektrisches Nahfeld erzeugt, das in das Koppelelement 2 gestreut wird, wodurch die übertragenen Nachrichten empfangen werden.

Der Stromkreis von Sender 1 zum Empfänger 4 und zurück ist senderseitig über die Koppelkapazität C_{N} zwischen Koppelelement 2 und Leiterelement 6 des Infrastrukturkörpers 3, durch das elektrische Leiterelement 6, empfangsseitig über die Koppelkapazität C_{M} zwischen Leiterelement 6 und Koppelelement 5 des Empfängers 4, über die Koppelkapazität C_{B} zwischen Empfänger 4 und Erde, und zurück über Erde als elektrischer Leiter und die Koppelkapazität oder Bodenkapazität C_{B} zwischen Erde und Sender 1 geschlossen. Dabei fließt über die jeweiligen Koppelkapazitäten C_{B}, C_{M} der aus der Funkübertragung bekannte Verschiebungsstrom und im Leiterelement 6 des Infrastrukturkörpers 3 sowie der Erde ein Leitungsstrom.

Als Infrastrukturkörper 3 mit seinem elektrischen Leiterelement 6 können ohnehin vorhandene Infrastrukturkörper 3, wie beispielsweise die Karosserie eines Autos, das Fundament einer Werksmaschine, ein gummiertes Kettenfließband, Turbinenschaufeln, metallisierte Produktetiketten, die Heizungsinstallation in einem Gebäude usw. verwendet werden.

Durch das quasistationäre elektrische Nahfeld zwischen Koppelelement 2 und Infrastrukturkörper 3, genügt eine relativ kleine Leistung, um über das Nahfeld eine entsprechende Wechselspannung in dem Leiterelement 6 zu induzieren. Das Übertragungssystem ist energiesparend und weist somit nur geringe Verluste auf. Die Reichweite des Nahfeldes ist allerdings sehr gering, so dass die Koppelelemente 2, 5 jeweils in der Nähe des Infrastrukturkörpers 3 mit seinem elektrischen Leiterelement 6 angeordnet sein müssen. Dies hat hingegen den Vorteil, dass die übertragenen Nachrichten nur schwer aus der Ferne abgehört oder manipuliert werden können, da eine Feldausbreitung im Fernfeld nicht vorhanden ist und Streufelder sehr schnell in ihrer Amplitude abklingen (proportional zu 1/r² oder 1/r³) .

Die Trägerfrequenz kann so gewählt werden, dass die Impedanzen der Bodenkapazitäten C_{B} und der Kopplungskapazitäten C_{M} zwischen Koppelelementen 2, 5 und Infrastrukturkörper 3 sehr niederohmig sind, wodurch der dadurch erfolgte Spannungsabfall und infolgedessen die Verluste gering sind. Die Kopplungskapazitäten C_{M} zwischen jeweiligen Koppelelement 2, 5 und dem Infrastrukturkörper 3 hängen darüber hinaus von den gegenseitigen Abständen und Abmessungen bei der jeweiligen Anwendung ab (kann analog wie die Kapazität eines Plattenkondensators berechnet werden).

Das elektrische Leiterelement 6 des Infrastrukturkörpers 3 sollte aus einem weitgehend homogenen Material bestehen und seine Leitfähigkeit sollte zeitinvariant sein (d.h. zeitlich nicht ändern). Somit liegt dann ein Übertragungsmedium für einen hochfrequenten Wechselstrom vor, das ein kompliziertes RCL-Netzwerk mit reproduzierbaren Verhältnissen darstellt. Die Verluste sind dennoch wesentlich geringer als in einem Hochfrequenzfunkkanal. Das elektrische Leiterelement 6 muss nicht einstückig sein. Kurze Abstände (nicht leitende Abschnitte) zwischen leitendem Material stellen wiederum Kopplungskapazitäten dar, die gut durch einen Verschiebungsstrom überbrückt werden können.

Der schematische Aufbau eines Senders 1 oder Empfängers 4 ist in der FIG 3 dargestellt. Dabei weist der jeweilige Sender 1 oder Empfänger 4 ein Gehäuse 7 auf, in dem ein Sendeelement Tx bzw. ein Empfangselement Rx angeordnet ist. Sender 1 und Empfänger 4 weisen jeweils eigenständige Energiequellen 8 auf, mögliche Sensoren 9 zum Messen von physikalischen Größen, eine Steuereinheit (Controller) 10 sowie die jeweiligen Koppelelemente 2, 5 und Bodenkoppelelemente 11.

Mit dem Sender 1 bzw. Empfänger 4 ist jeweils ein Koppelelement 2, 5 elektrisch verbunden, das eine kapazitive Elektrode darstellt. Es kann auch ein Kondensator als Koppelelement 2, 5 verwendet werden. Durch das Koppelelement 2, 5 wird ein im Wesentlichen elektrisches Nahfeld (Streufeld) erzeugt und im Nahbereich abgestrahlt. Das Koppelelement 2, 5 kann auch durch eine galvanische Verbindung ersetzt werden. Dann fließt der hochfrequente Leitungsstrom vom Sender 1 über ein nicht dargestelltes Anpassungsnetzwerk und über die galvanische Verbindung unmittelbar zum Leiterelement 6 des Infrastrukturkörpers 3.

Zwischen Sender 1 und galvanischer Verbindung ist dann ein Anpassungsnetzwerk, das beispielsweise zumindest einen konzentrierten Kondensator aufweisen kann, über den das gestreute Nahfeld in die galvanische Verbindung eingekoppelt wird.

Sender 1 bzw. Empfänger 4 weisen jeweils eine Koppelkapazität gegen Erde (als Bodenkapazität C_{B} bezeichnet) auf, die durch eine Elektrode (auch als Bodenkoppelelement 11 bezeichnet) des Senders 1 und dem leitenden Boden als zweite Elektrode gebildet wird. Zudem weist jeder Sender 1 und jeder Empfänger 4 jeweils zumindest ein Koppelelement 2, 5 (auch als Mediumkoppler bezeichnet) auf, das die elektrische Kopplung zum elektrischen Leiterelement 6 des Infrastrukturkörpers 3 bewerkstelligt.

Mit Hilfe der Steuereinheit 10 können Sensorsignale oder vom Sensor erhaltene Daten auf einen hochfrequenten Träger als zu übertragende Daten aufmoduliert bzw. demoduliert werden. Bei solchen Sendern 1 und Empfängern 4 können herkömmliche Techniken der Nachrichtenübertragung, wie Modulation und Demodulation, die dem Fachmann hinreichend sind, verwendet werden.

Da in dem Leiterelement 6 des Infrastrukturkörpers 3 ein hochfrequenter Leitungsstrom (I_{HF}) fließt, ist die Dämpfung entlang des Leiterelements 6 wesentlich geringer als bei einer vergleichbaren Funkübertragung, bei der ein stärker verlustbehafteter Verschiebungsstrom fließt. Somit genügt es, wenn das elektrische Feld mit geringerer Energie erzeugt wird, um gegenüber der gewöhnlichen Funktechnik Energie einzusparen, um dennoch relativ große Reichweiten für die Übertragung zu erhalten.

Auch wenn über den Infrastrukturkörper 3 nur in einer Richtung Daten übertragen werden, so kann dennoch eine einheitliche Synchronisation - wie bei Zweiwegesystemen - stattfinden, indem der Systemtakt in das Übertragungsmedium eingespeist wird. Aus diesem Grunde wird auch nur ein einziger elektisches Leiterelement 6, das heißt eine einzige elektrische Verbindung zwischen den Koppelelementen 2, 5 benötigt. Man spricht dann von einem unsymmetrischen elektrischen Leiterelement 6, das als Rückleiter das Erdpotential ausnützt. Die Energieeinspeisung in den Infrastrukturkörper 3 geschieht dann eben auch unsymmetrisch.

Die Nachrichtenübertragung kann dabei - ebenso wie bei der konventionellen Datenübertragung - auch bidirektional vonstatten gehen. Auch eine parallele Mehrfachübertragung, wie aus der Nachrichtentechnik bekannt, kann eingesetzt werden.

Im Folgenden wird das erfindungsgemäße Nachrichtenübertragungssystem gemäß FIG 1 beschrieben. Es weist einen Sender mit einem ersten Koppelelement 24 und einen Empfänger mit einem zweiten Koppelelement 26 auf. Zwischen den Koppelelementen 24, 26 befindet sich ein ohnehin vorhandener Infrastrukturkörper 25, der eine elektrische Leiterbahn aufweist. In bekannter Weise dient das erste Koppelelement 24 zur Ausstreuung eines elektrischen Nahfelds und Einkopplung desselben in die Leiterbahnen des Infrastrukturkörpers 25. Mit Hilfe des zweiten Koppelelements 26 wird das über die Leiterbahn übertragene Nahfeld ausgekoppelt. Senderseitig ist ein erster Wandler 20 vorgesehen, der die jeweils zur Verfügung stehende Prozess- oder Schwingungsenergie in elektrische Energie umwandelt. Beispiele für einen solchen Wandler 20 sind ein piezoelektrisches Element zur Umwandlung von Druck-/Verformungsenergie, ein pyroelektrischer Körper, ein Thermoelement-Paar, ein Element mit Seebeck-/Peltier-Effekt oder dergleichen zur Transformation von Wärmeenergie mit Temperaturgradient, ein elektrodynamisches oder piezoelektrisches System zur Umsetzung von Schwingungs-/Beschleunigungsänderungs-Energie in diese als niederfrequent definierte elektrische Energie. Z.B. liefert ein Piezoelement durch die Fahrzeugbewegung ein Signal mit einer niederfrequenten spektralen Verteilung bis in den Bereich von wenigen MHz. Diesem ersten Wandler 20 ist ein Sensor 21, z.B. in Form eines piezoelektrischen bzw. keramischen Elements, nachgeschaltet. Dieser Sensor 21 hat die besondere Eigenschaft, dass er einen spektralen Durchlassbereich aufweist, der durch mechanische Beeinflussung veränderbar ist. Damit wird aus dem Spektrum am Ausgang des Wandlers 20, das eine größere Bandbreite umfasst, der Teil an das Koppelelement 24 weitergegeben, der dem Messwert entspricht. Der Sensor 21 ist also ein messwertabhängiger Bandpass.

Ein solcher Sensor kann vorteilhafterweise als Resonator 21 ausgeführt sein, der in üblicher Weise die Frequenzen passieren lässt, die seiner Resonanzfrequenz und einer schmalen Umgebung, die durch die Güte bestimmt ist, entsprechen. Wird an den Eingang dieses Filters das breitbandige Spektrum gelegt, dass mittels Wandler 20 aus einer anderen Energieform erzeugt wurde, ergibt sich am Ausgang des Resonators 21 nur noch ein schmalbandiges Signal, welches direkt an das Koppelelement 24 gelegt und übertragen werden kann. Der Resonator 21, der die Signalselektion vornimmt, kann von äußeren Einflüssen, also von Druck, Temperatur, elektrischen oder magnetischen Feldstärken, etc. abhängig sein. In diesem Fall hängt das übertragene Spektrum von der äußeren Beeinflussung, also vom physikalischen Messwert ab.

Das Spektrum am Ausgang des Sensors 21 wird mit Hilfe des Koppelelements 24 über das Streufeld in den Infrastrukturkörper, z.B. das Fahrzeug Chassis, eingekoppelt und übertragen.

Durch die beschränkte relative Bandbreite des Resonators 21 kann die anregende spektrale Dichte als annähernd konstant betrachtet werden.

Auf der Empfängerseite ist dem zweiten Koppelelement 26 eine Empfangseinheit 27 nachgeschaltet. Sie detektiert in der bekannten Bandbreite und wertet die empfangene Frequenz bzw. deren Variationen als Messwert z.B. für die mechanische Schwingung am Sensor 21 aus. Gemäß dieser Ausführung können dabei einfachste drahtlose passive Sensoren 21 verwendet werden.

## Patentansprüche

1. Nachrichtenübertragungssystem mit einem Sender, der ein erstes Koppelelement (24) aufweist, mit einem Empfänger, der ein zweites Koppelelement (26) aufweist, mit einem Infrastrukturkörper (25), der eine elektrische Leiterbahn aufweist, wobei das erste Koppelelement (24) zur Ausstreuung eines elektrischen Nahfelds und Einkopplung desselben in die Leiterbahn dient und das zweite Koppelelement (26) zur Auskopplung des in der Leiterbahn übertragenen Nahfelds dient, sowie mit mindestens einem Sensor (21) zur Messwerteerfassung und einer senderseitigen Energiequelle, **dadurch gekennzeichnet, dass** die Energiequelle einen Wandler (20) aufweist, der die zur Verfügung stehende nicht elektrische Prozess- oder Schwingungsenergie in elektrische Energie umwandelt und dass der Wandler (20) nachgeschaltete Sensoren als messwertabhängiger Bandpass (21) ausgeführt ist.

2. Nachrichtenübertragungssystem nach Anspruch 1,
**dadurch gekennzeichnet, dass** der Wandler (20) nach dem elektrodynamischen Prinzip oder piezoelektrisch arbeitet.

3. Nachrichtenübertragungssystem nach Anspruch 1 oder 2,
**dadurch gekennzeichnet, dass** der Wandler (20) zur Erzeugung eines breitbandigen Signalspektrums aus der Prozess- oder Schwingungsenergie dient.

4. Nachrichtenübertragungssystem nach Anspruch 3, **dadurch gekennzeichnet, dass** der Sensor als Resonator (21) ausgeführt ist, der aus dem breitbandigen Signalspektrum ein messwertabhängiges schmalbandiges Signalspektrum erzeugt.
